# EUROPEAN PATENT APPLICATION

(11) **EP 1 366 839 A2**
(43) Date of publication of application: **03.12.2003**
(21) Application number: 03253033.9
(22) Date of filing: 15.05.2003
(51) Int. Cl.: B22D 17/26, B29C 45/67

(54) **Clamping assembly for die cast machine**

(30) Priority: 21.05.2002 US 152875
(71) Applicant: Idraprince Inc., Holland, Michigan 49423 (US)
(72) Inventor: Baron, Frank D.R., Caledonia, Michigan 49316 (US); Brower, Rodger W., Allendale, Michigan 49401 (US); Berens, Ross A., Hamilton, Michigan 49419 (US); Ferriell, J. Scott, Kentwood, Michigan 49508 (US); McMaster, Timothy J., West Olive, Michigan 49460 (US); Scholten, Thomas L., Holland, Michigan 49424 (US); Dioni, Fiorenzo O., 25030 Castelmella (BS) (IT); Bertelli, Paolo, 25124 Brescia (IT)
(74) Representative: Miller, James Lionel Woolverton

(57) **Abstract**

A clamping assembly for providing lock-up pressure between die blocks (20,22) of a die cast machine (10) includes at least one tie bar engagement mechanism (26) adapted to releasably engage a tie bar of a die cast machine, thereby preventing the tie bar engagement mechanism from sliding with respect to the tie bar. The clamping assembly also includes at least one hydraulic piston assembly (28) having a first end and a second end, wherein the first end is adapted to apply pressure to a die block of the die cast machine when the piston assembly is extended, and wherein the second end abuts the tie bar engagement mechanism when the tie bar engagement mechanism is engaged with the tie bar and the piston assembly is extended.

## Description

The present invention relates to a die cast machine, and in particular to a clamping mechanism for providing lock-up pressure between the die blocks of the die cast machine.

Die cast machines that include three platens are used in a wide variety of applications. These three-platen hydraulic machines typically include two stationary platens and one movable platen located therebetween. A toggle clamp is typically located between one of the stationary platens and the movable platen and provides lock-up pressure between the movable platen and the stationary platen not associated with the toggle clamp. The present invention relates to a system enabling a useful arrangement which may only have two platens.

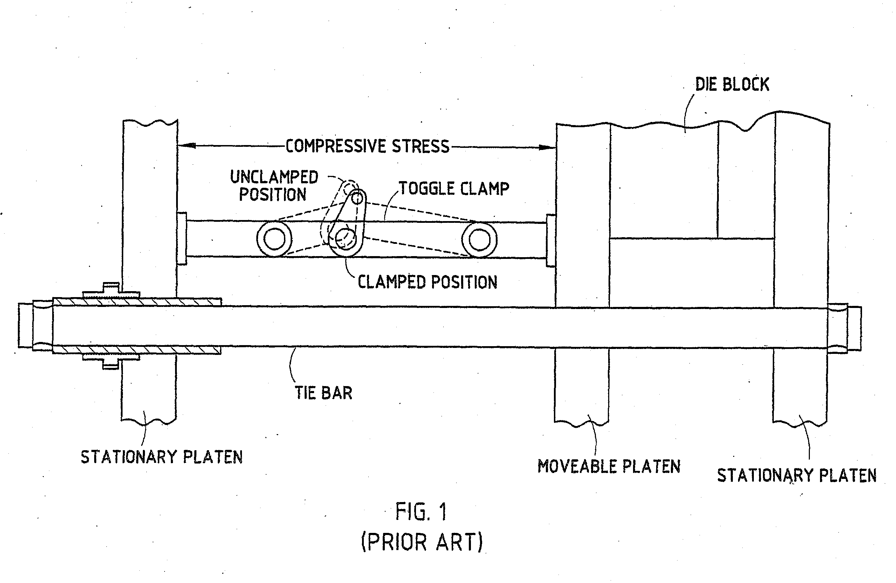

Heretofore, the toggle clamps typically include a plurality of hinged arms that extend between the platens. As an example, Fig. 1 illustrates a prior art three-platened die cast machine that includes two stationary platens and a movable platen located therebetween. The toggle clamp includes a plurality of at least four linked arms. A compressive stress between one of the stationary platens and the movable platen is created when the four-linkage arm is pivoted towards a fully extended position. Further, three-platen die cast machine designs typically require a significantly large area in which to place the machine because of the three-platen design.

Various aspects of the invention are set out in the independent claims. Various options are discussed in the dependent claims.

Another aspect provides a clamping assembly for providing lock-up pressure between die blocks of a die cast machine includes at least one tie bar engagement mechanism adapted to releasably engage a tie bar of a die cast machine, thereby preventing the tie bar engagement mechanism from sliding with respect to the tie bar. The clamping assembly also includes at least one hydraulic piston assembly having a first end and a second end, wherein the first end is adapted to apply pressure to a die block of the die cast machine when the piston assembly is extended, and wherein the second end abuts the tie bar engagement mechanism when the tie bar engagement mechanism is engaged with the tie bar and the piston assembly is extended.

Another aspect of the present invention is to provide a clamping assembly for providing lock-up pressure between the die blocks of a die cast machine, including at least one tie bar engagement mechanism adapted to releasably engage a tie bar of a die cast machine, thereby preventing the tie bar from sliding with respect to the tie bar engagement mechanism. The clamping assembly also includes at least one hydraulic piston assembly having a first end and a second end, wherein the first end is adapted to apply pressure to a die block of the die cast machine when the piston assembly is extended, and wherein the second end abuts the tie bar engagement mechanism when the tie bar engagement mechanism is engaged with the tie bar and the piston assembly is extended.

Another aspect of the present invention is to provide a die cast machine, including a frame assembly, a first platen fixed with respect to the frame assembly, and a second platen movable with respect to the first platen between an open position and a closed position. The die cast machine also includes a die block having a first portion fixedly attached to the first platen and a second portion fixedly attached to the second platen, wherein the second portion of the die block is spaced apart from the first portion of the die block when the second platen is in the open position, and wherein the second portion of the die block abuts the first portion of the die block when the second platen is in the closed position. The die cast machine further includes at least one tie bar extending between the first platen and the second platen, and at least one tie bar engagement mechanism adapted to releasably engage the tie bar, thereby preventing the tie bar engagement mechanism from sliding with respect to the tie bar. The die cast machine still further includes at least one hydraulic piston assembly having a first end and a second end, wherein the first end abuts the second portion of the die block and applies pressure thereto when the piston assembly is extended, and wherein the second end abuts the tie bar engagement mechanism when the tie bar engagement mechanism is engaged with the tie bar and the piston assembly is extended.

Yet another aspect of the present invention is to provide a clamping assembly for providing lock-up pressure between the die block of a die cast machine, including at least one hydraulic piston assembly having an outer housing, an inner piston, a first end, and a second end, wherein the first end is adapted to apply pressure to a die block of the die cast machine when the piston assembly is extended, and wherein the second end is adapted to abut an engagement member of the die cast machine. The clamping assembly also includes a mechanical lock-up mechanism mechanically linked to the inner piston and abutting the outer housing, thereby limiting the longitudinal travel of the outer housing with respect to the inner piston.

Yet another aspect of the present invention is to provide a die cast machine that includes a frame assembly, a first platen fixed with respect to the frame assembly, and a second platen movable with respect to the first platen between an open position and a closed position. The die cast machine also includes a die block having a first portion fixedly attached to the first platen and a second portion fixedly attached to the second platen, wherein the second portion of the die block is spaced apart from the first portion of the die block when the second platen is in the open position, and wherein the second portion of the die block abuts the first portion of the die block when the second platen is in the closed position. The die cast machine further includes at least one tie bar extending between the first platen and the second platen, and at least one hydraulic piston assembly having an outer housing, an inner piston, a first end, and a second end, wherein the first end is adapted to apply pressure to the die block of the die cast machine when the piston assembly is extended, and wherein the second end is adapted to abut an engagement member of the die cast machine. The die cast machine further includes a mechanical lock up mechanism mechanically linked to the inner piston and abutting the outer housing, thereby limiting the longitudinal travel of the outer housing with respect to the inner piston.

Still yet another aspect of the present invention is to provide a method for clamping a two-platen die cast machine that includes a frame assembly, a first platen fixed with respect to the frame assembly, and a second platen movable with respect to the first platen between an open position and a closed position. The die cast machine also includes a die block having a first portion fixedly attached to the first platen and second portion fixedly attached to the second platen, wherein the second portion of the die block is spaced apart from the first portion of the die block when the second platen is in the open position, and wherein the second portion of the die block abuts the first portion of the die block when the second platen is in the closed position. The die cast machine further includes at least one tie bar extending between the first platen and the second platen. The method includes moving the second platen to the closed position, releasably engaging a tie bar of the die cast machine with a tie bar engagement mechanism, thereby preventing the tie bar engagement mechanism from sliding with respect to the tie bar. The method also includes providing a clamping force between the first die block and the second die block by extending at least one hydraulic piston assembly between the second platen and the tie bar engagement mechanism.

These and other advantages of the invention will be further understood and appreciated by those skilled in the art by reference to the following written specification, claims and appended drawings.

The present invention may be carried out in various ways and, as an example only, a preferred embodiment will now be described with reference to the accompanying drawings, in which:
Fig. 1 is a fragmentary front view of a prior art, three-platen die cast machine;
Fig. 2 is a cross-sectional front elevational view of a two-platen die cast machine embodying the present invention, with a movable platen in an open position;
Fig. 3 is a cross-sectional front elevational view of the two-platen die cast machine, with the movable platen in a closed position;
Fig. 4 is a cross-sectional front elevational view of the two-platen die cast machine, with a pair of tie bars withdrawn for removal of the die blocks; and
Fig. 5 is an enlarged, cross-sectional front view of a clamping assembly, including a tie bar engagement mechanism, a hydraulic lock-up piston and a mechanical lock-up mechanism.

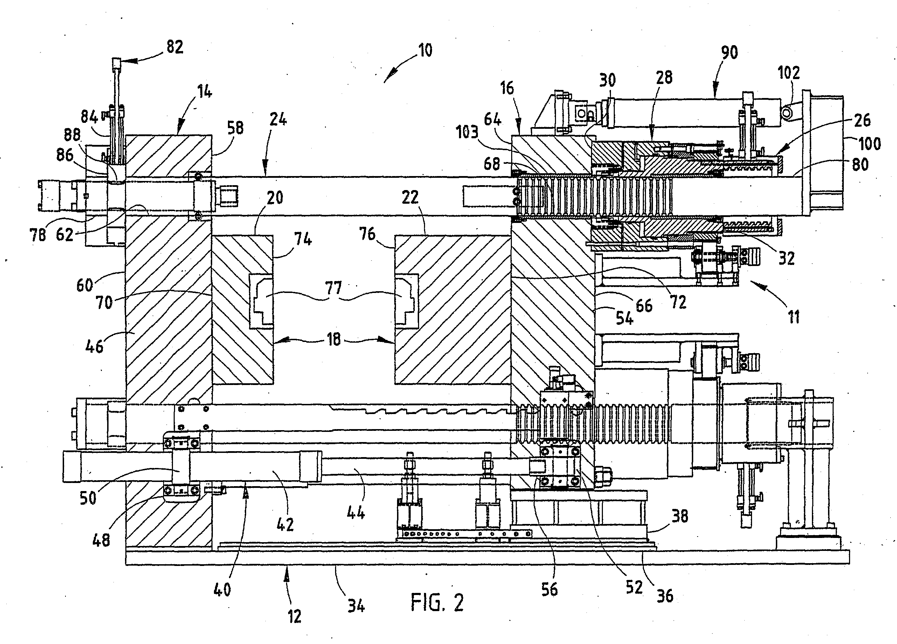

For purposes of description herein, the terms "upper," "lower," "right," "left," "rear," "front," "vertical," "horizontal," and derivatives thereof shall relate to the invention as oriented in Fig. 2. However, it is to be understood that the invention may assume various alternative orientations and step sequences, except where expressly specified to the contrary. It is also to be understood that the specific devices and processes illustrated in the attached drawings, and described in the following specification are exemplary embodiments of the inventive concepts defined in the appended claims. Hence, specific dimensions and other physical characteristics relating to the embodiments disclosed herein are not to be considered as limiting, unless the claims expressly state otherwise.

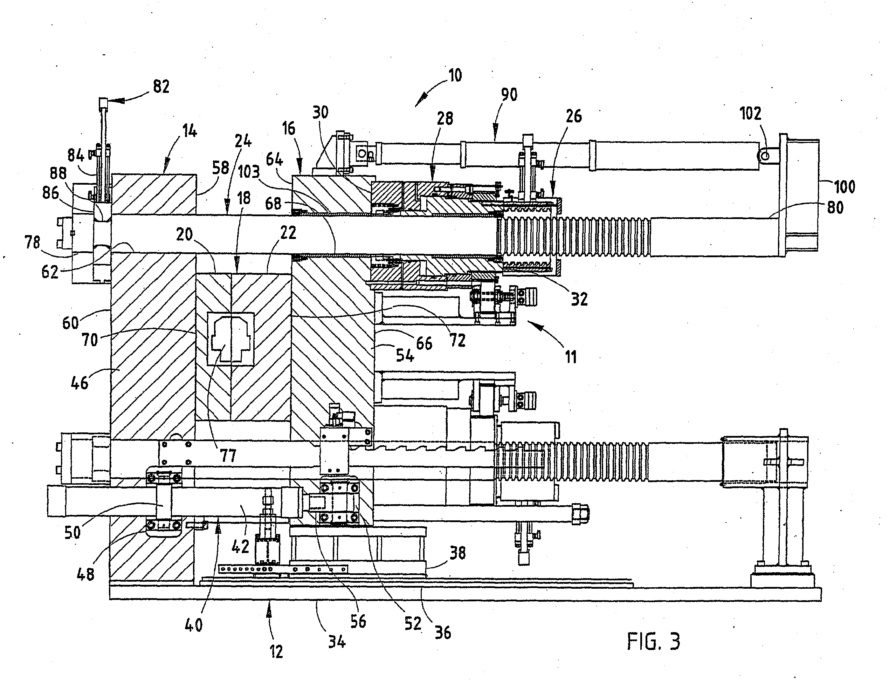

The reference number 10 (Fig. 2) generally designates a two-platen die cast machine that includes a clamping assembly 11 embodying the present invention. In the illustrated example, die cast machine 10 includes a frame assembly 12, a first platen 14 fixed with respect to frame assembly 12 and a second platen 16 movable with respect to frame assembly 12 and first platen 14 between an open position as illustrated in Fig. 2 and a closed position as illustrated in Fig. 3. Die cast machine 10 also includes a die block 18 having a first portion 20 fixedly attached to first platen 14 via a plurality of bolts (not shown), and a second portion 22 fixedly attached to second platen 16 via a plurality of bolts (not shown). The second portion 22 of die block 18 is spaced apart from first portion 20 of die block 18 when second platen 16 is in the open position, while second portion 22 of die block 18 abuts first portion 20 of die block 18 when second platen 16 is in the closed position. Die cast machine 10 further includes four tie bars extending between first platen 14 and second platen 16. Die cast machine 10 still further includes a tie bar engagement mechanism 26 associated with each tie bar 24. Each tie bar engagement mechanism 26 releasably engages a tie bar 24, thereby preventing each tie bar engagement mechanism 26 from sliding with respect to the associated tie bar 24. Die cast machine 10 further includes at least one hydraulic piston assembly 28 having a first end 30 and a second end 32, wherein first end 30 applies pressure to second portion 22 of die block 18 when piston assembly 28 is extended, and wherein second end 32 of piston assembly 28 abuts tie bar engagement mechanism 26 when tie bar engagement mechanism 26 is engaged with tie bar 24 and piston assembly 28 is extended. The lock-up pressure between first portion 20 and second portion 22 of die block 18 as provided by piston assembly 28, thereby eliminates the requirement for a third platen and an associated toggle clamp.

The frame assembly 12 includes a base member 34 to which first platen 14 is fixedly attached. Frame assembly 12 further includes a rail system 36 fixedly attached to and extending longitudinally along base member 34. Rail system 36 slidably supports a sliding base 38 which in turn supports second platen 16 which is fixedly attached thereto. Sliding base 38 is slidably movable between a first position corresponding to the open position for second platen 22 as shown in Fig. 2, and a second position corresponding to the closed position of second platen 16 and as shown in Fig. 3. A pair of transverse cylinders 40 juxtaposed about first platen 14 and second platen 16 move second platen 16 between the first and second positions of sliding base 38. Cylinder 40 includes a cylinder housing 42 and a cylinder piston 44. In the illustrated example, housing 42 of each cylinder 40 is fixedly attached to a side surface 46 of first platen 14 via a clamp 48 that includes a collar 50 that encircles housing 42. Piston 44 is fixedly attached to second platen 16 via a clamp 52 that is fixedly attached to a side surface 54 of second platen 16 and that includes a collar 56 that fixedly holds a portion of piston 44 therein. It should be noted that while clamps 48 and 52 are utilized to attach cylinders 40 to platens 14 and 16 other suitable methods of attachment may be utilized.

The first platen 14 has an inner surface 58, an outer surface 60 and a plurality of apertures 62 extending between inner surface 58 and outer surface 60 that receive tie bars 24 therein as described below. Second platen 16 includes an inner surface 64, and outer surface 66 and a plurality of apertures 68 extending between inner surface 64 and outer surface 66 for receiving tie bars 24 therein as described below. A bushing 103 is placed within each aperture 68 of movable second platen 16, thereby facilitating movement of second platen 16 along tie bars 24 during operation of machine 10.

The first portion 20 of die block 18 is fixedly attached to first platen 14 via a plurality of bolts (not shown) such that an outer surface 70 of first portion 20 abuts inner surface 58 of first platen 14. Second portion 22 of die block 18 is fixedly attached to second platen 16 via a plurality of bolts (not shown), such that an outer surface 72 of second portion 22 abuts inner surface 64 of second platen 16. First portion 20 of die block 18 includes an inner surface 74, while second portion 22 of die block 18 includes an inner surface 76. First portion 20 and second portion 22 of die block 18 each include a recessed cavity area 77 extending inwardly into inner surface 74 and inner surface 76, respectively, and that are adapted to receive a cavity block (not shown) therein.

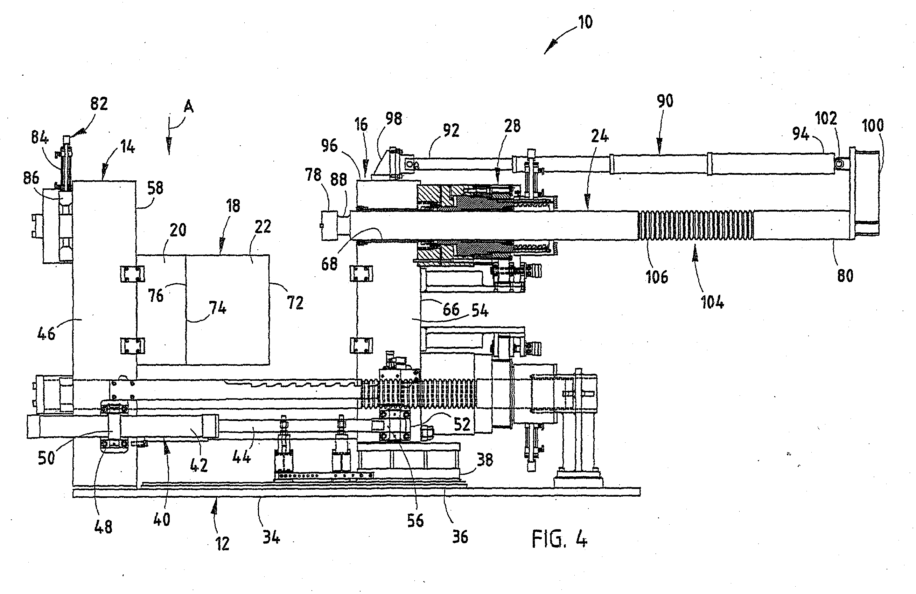

Each tie bar 24 includes a first end 78 and a second end 80. The two upper tie bars 24 are movable between an extended position wherein first end 78 of each tie bar 74 extends through an associated aperture 62 within first platen 14 (Figs. 2 and 3), and a retracted position wherein first end 78 of each tie bar 74 is disengaged from aperture 62 of first platen 14 (Fig. 4) to facilitate changing of die block 18 from within die cast machine 10. First end 78 of each tie bar 24 is held into engagement within an associated aperture 62 by a hydraulic engagement mechanism 82. Each engagement mechanism 82 includes a hydraulic cylinder 84 operably connected to a pair of engagement cams 86. Engagement cams 86 engage a groove 88 extending circumferentially about each tie bar 24. A multi-stage hydraulic cylinder 90 facilitates the movement of the upper tie bars 24 between the extended and the retracted positions. In the illustrated example, hydraulic cylinder 90 includes three separate stages, however, a fewer or greater number of stages may be utilized depending upon the particular application. The cylinder 90 includes a first end 92 and a second end 94. First end 92 is fixedly attached to an upper surface 96 of second platen via a clamp 98. The second end 94 of each cylinder 90 is operably connected to second end 80 of an associated tie bar 24 via a bridge 100 fixedly attached to second end 80 of tie bar 24 and pivotally attached to second end 94 of cylinder 90 at a point 102. Each tie bar 24 also includes an engagement area 104 located between ends 78 and 80. Engagement area 104 includes a plurality of circumferentially extending grooves 106.

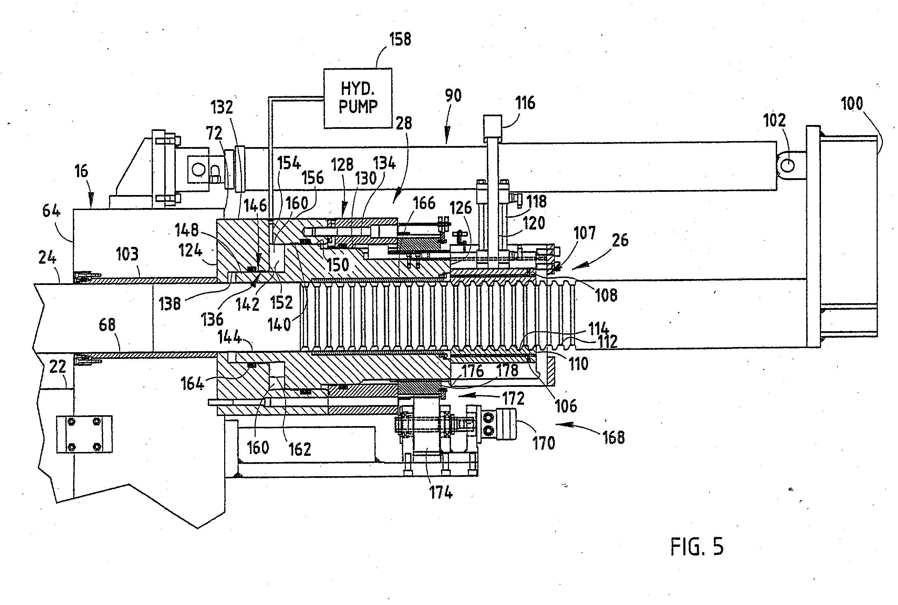

Each tie bar engagement mechanism 26 (Fig. 5) includes an engagement member or split-nut 107 having a first portion 108 and a second portion 110 each having an arcuately shaped interior surface 112 having a plurality of laterally extending grooves 114 adapted to mate with grooves 106 of the associated tie bar 24. First portion 108 and second portion 110 of split nut 107 are actuated via a hydraulic cylinder assembly 116 having hydraulic cylinders 118 and guide 120.

The piston assembly 28 (Fig. 5) defines a first end 124 and a second 126. Piston assembly 28 includes a housing assembly 128 and an inner piston 130. Housing assembly 128 includes a housing 132 and a spacer 134, that together define a longitudinally extending interior bore 136. Interior bore 136 is defined by a first radius 138 and a second radius 140. A radially extending interior wall 142 extends between and perpendicular to first radius 138 and second radius 140. Piston 130 includes a longitudinally extending internal bore 144 adapted to receive an associated tie bar 24 slidably therein. Piston 130 also includes a circularly-shaped outer surface 146 defined by a first radius 148, a second radius 150 and a radially extending end wall 152 extending between and perpendicular to first radius 148 and second radius 150. In assembly, each housing assembly 128 is located about an associated tie bar 24 such that the associated tie bar 24 extends through bore 144 of piston 130, first end 124 of piston assembly 28 abuts outer surface 72 of second platen 16, and second end 126 of piston assembly 28 abuts tie bar engagement mechanism 26. Housing 132 of housing assembly 128 includes a port 154 extending from an outer surface 156 of housing 132 to second radius 140 of housing 132. Port 154 is located within housing 132 such that a hydraulic fluid can be delivered from a hydraulic pump 158 in fluid communication with port 154, to a chamber 160 located within bore 136 of housing 132 and between wall 142 of housing 132 and end wall 152 of piston 130. As illustrated in Fig. 5, an increase in hydraulic pressure within chamber 160 results in a force indicated by a directional arrow 162 to be applied to housing 132 and thus to second platen 16 and second portion 22 of die block 18. It should be noted that while hydraulic pump 158 is described as providing the hydraulic pressure to chamber 160, other suitable means for supplying such pressure may be utilized but in no way limited to an intensifier cylinder and the like. A plurality of circumferentially extending seals 164 are seated about bore 136 of housing assembly 128, thereby ensuring a tight seal between bore 136 of housing assembly 128 and piston 130. A bushing 166 is located within bore 144 of piston 130 and about tie bar 24.

The die cast machine 10 further includes a mechanical lock-up mechanism 168 (Fig. 5) mechanically linked to inner piston 130 and abutting outer housing 132, and which provides additional lock-up pressure between first portion 20 and second portion 22 of die block 18. Lock-up mechanism 168 includes a hydraulic motor 170 mechanically linked to piston 130 via a gear train 172. Gear train 172 includes a pinion gear 174 that engages a ring gear 178 that in turn engages a threaded portion 176 of outer surface 146 of piston 130. In assembly, ring gear 178 abuts spacer 134, which in turn abuts housing 132. Hydraulic motor 170 further extends piston assembly 28, thereby restricting the longitudinal travel of outer housing 132 with respect to inner piston 130, and subsequently the movement of second portion 22 with respect to first portion 20 of die block 18.

In operation, second platen 16 begins in an open position, wherein second portion 22 of die block 18 is spaced apart from first portion 20 of die block 18 as illustrated in Fig. 2. Hydraulic cylinders 40 are then actuated to slide base 38 and second platen 16 along rail system 36 of frame assembly 12 until second platen 16 is in the closed position and inner surface 76 of second portion 22 of die block 18 abuts inner surface 74 of first portion 20 of die block 18 or is in close proximity thereto, as illustrated in Fig. 3. Cylinder assembly 116 of tie bar engagement mechanism 26 is then actuated engaging grooves 114 of first portion 108 and second portion 110 of split nut 107 with grooves 106 of tie bar 24, thereby clamping tie bar 24 between first portion 108 and second portion 110 of split nut 107 and preventing tie bar engagement mechanism 26 from slidably moving along tie bar 24. Lock-up pressure is then provided by piston assembly 28, as precise alignment between first portion 20 and second portion 22 of die block 18 might not be accomplished by engaging tie bar engagement mechanism 26 with tie bar 24 due to the size of grooves 106 and 114. Lock-up pressure is provided by pumping hydraulic fluid from hydraulic pump 158 to chamber 160 within piston assembly 28 via port 154. As the pressure within chamber 160 is increased, housing 132, second platen 16 and second portion 22 of die block 18 are forced in the direction 162. During this operation, piston 130 is unable to slide in a direction opposite to direction 162, as piston 130 abuts tie bar engagement mechanism 26 which is engaged with tie bar 24. The longitudinal travel of outer housing 132 is locked with respect to inner piston 130 via mechanical lock-up mechanism 168. Specifically, hydraulic motor 170 engages gear train 172 that in turn threadably engages piston 130. The ring gear 178 of gear train 172 abuts spacer 134 which in turn abuts housing 132. The ring gear 178 is threaded along piston 130 such that ring gear 178 abuts spacer 134 which in turn abuts housing 132 forcing housing 132 in the direction 162 with respect to piston 130. This pressure applied to housing 132 of housing assembly 128 is transferred to second platen 16 and second portion 22 of die block 18, thereby limiting the longitudinal travel of outer housing 132 with respect to inner piston 130, and subsequently the travel of second portion 22 with respect to first portion 20 of die block 18. The lock-up pressure as provided between first portion 20 and second portion 22 of die block 18 is released by reversing hydraulic motor 170 of mechanical lock-up mechanism 168, and by releasing the hydraulic pressure within chamber 160.

The present inventive clamping assembly provides a two-platen die cast machine having a reduced foot print, and a reduced manufacturing cost. The two-platen die cast machine requires less hydraulic oil than a conventional three-platen die cast machine, thereby resulting in faster cycle times during operation, a reduced horsepower requirement and an increased energy efficiency.

In the foregoing description, it will be readily appreciated by those skilled in the art that modifications may be made to the invention without departing from the concepts disclosed herein. Such modifications are to be considered as included in the following claims, unless these claims by their language expressly state otherwise.

## Claims

1. A clamping assembly for providing lock-up pressure between the die blocks (20,22) of a die cast machine (10), comprising: at least one tie bar engagement mechanism (26) adapted to releasably engage a tie bar (24) of a die cast machine, thereby preventing the tie bar from sliding with respect to the tie bar engagement mechanism; and at least one hydraulic piston assembly (28) having a first end (30) and a second end (32), wherein the first end is adapted to apply pressure to a die block (22) of the die cast machine when the piston assembly is extended, and wherein the second end (32) is adapted to abut the tie bar engagement mechanism when the tie bar engagement mechanism is engaged with the tie bar and the piston assembly is extended.

2. Apparatus as claimed in claim 1, further including: an intensifier cylinder adapted to provide hydraulic pressure to the hydraulic piston assembly.

3. Apparatus as claimed in claim 1 or claim 2 further including: a hydraulic pump (158) adapted to provide the hydraulic pressure to the hydraulic piston assembly.

4. A die cast machine (10), comprising: a frame assembly (12); a first platen (14) fixed with respect to the frame assembly; a second platen (16) movable with respect to the first platen between an open position and a closed position; a die block (18) having a first portion (20) fixedly attached to the first platen and a second portion (22) fixedly attached to the second platen, wherein the second portion of the die block is arranged to be spaced apart from the first portion of the die block when the second platen is in the open position, and wherein the second portion of the die block is adapted to abut the first portion of the die block when the second platen is in the closed position; at least one tie bar (24) extending between the first platen and the second platen; at least one tie bar engagement mechanism (26) releasably engaging the tie bar, thereby preventing the tie bar engagement mechanism from sliding with respect to the tie bar; and at least one hydraulic piston assembly (28) having a first end (30) and a second end (32), wherein the first end is adapted to apply pressure to the second portion of the die block when the piston assembly is extended, and wherein the second end is adapted to abut the tie bar engagement mechanism when the tie bar engagement mechanism is engaged with the tie bar and the piston assembly is extended.

5. Apparatus as claimed in any preceding claim, wherein the hydraulic piston assembly (28) includes an outer housing (132) having longitudinally extending bore (136), and an inner piston (130) received within the bore of the outer housing and having a longitudinally extending bore, and the longitudinally extending bore of the of the inner piston is adapted to slidingly receive the tie bar (24) therein.

6. Apparatus as claimed in claim 5 or claim 16, further including: a mechanical lock up mechanism (168) that threadably engages the inner piston (130) and abuts the outer housing (132), thereby limiting the longitudinal travel of the outer housing with respect to the inner piston (130).

7. A clamping assembly for providing lock-up pressure between the die blocks (20,22) of a die cast machine (10), comprising: at least one hydraulic piston assembly (28) having an outer housing (132), an inner piston (130), a first end (30) and a second end (32), wherein the first end is adapted to apply pressure to a die block (22) of the die cast machine when the piston assembly is extended, and wherein the second end is adapted to abut an engagement member of the die cast machine; and a mechanical lock-up mechanism (168) mechanically linked to the inner piston and abutting the outer housing, thereby limiting the longitudinal travel of the outer housing with respect to the inner piston.

8. A die cast machine (16), comprising: a frame assembly (12); a first platen (14) fixed with respect to the frame assembly; a second platen (16) movable with respect to the first platen between an open position and a closed position; a die block (18) having a first portion (20) fixedly attached to the first platen and a second portion (22) fixedly attached to the second platen, wherein the second portion of the die block is arranged to be spaced apart from the first portion of the die block when the second platen is in the open position, and wherein the second portion of the die block is arranged to abut the first portion of the die block when the second platen is in the closed position; at least one tie bar (24) extending between the first platen and the second platen; at least one hydraulic piston assembly (28) having an outer housing (132), an inner piston (130), a first end (30) and a second end (32), wherein the first end is adapted to apply pressure to the die block of the die cast machine when the piston assembly is extended, and wherein the second end is adapted to abut an engagement member of the die cast machine; and a mechanical lock-up mechanism (168) mechanically linked to the inner piston and abutting the outer housing, thereby limiting the longitudinal travel of the outer housing with respect to the inner piston.

9. Apparatus as claimed in claim 6 or claim 7 or claim 8, wherein the mechanical lock-up mechanism (168) threadably engages the inner piston (130).

10. Apparatus as claimed in any one of claims 6 to 9, wherein the mechanical lock-up mechanism (168) includes a hydraulic motor (170) in operable communication with the inner piston.

11. Apparatus as claimed in claim 10, wherein the hydraulic motor (170) is in operable communication with the inner piston via a pinion gear (174) and a ring gear (178).

12. Apparatus as claimed in claim 7 or claim 8, or any one of claims 9 to 11 and 11 when dependent on claim 7 or claim 8, wherein the outer housing has a longitudinally extending bore (132), and the inner piston (130) is received within the bore of the outer housing and has a longitudinally extending bore, and wherein the longitudinally extending bore of the of the inner piston is adapted to slidingly receive the tie bar therein.

13. Apparatus as claimed in claim 5 or claim 12 or any preceding claim when dependent on claim 5 or claim 12, wherein the bore of the outer housing (132) includes a radially extending interior wall, the inner piston includes an end wall, and wherein the hydraulic piston is adapted to receive hydraulic fluid within the bore of the outer housing and between the interior wall of the outer housing and the end wall of the inner piston.

14. Apparatus as claimed in claim 5 or claim 12 or claim 13, wherein the outer housing (132) includes an aperture (154) extending between an outer surface of the outer housing and the bore of the outer housing, and wherein the bore provides fluid communication to the bore of the outer housing for the hydraulic fluid.

15. Apparatus as claimed in claim 14, further including: an intensifier cylinder adapted to provide the hydraulic fluid to the bore of the outer housing via the aperture in the outer housing.

16. Apparatus as claimed in claim 14, further including: a hydraulic pump (158) adapted to provide the hydraulic fluid to the bore of the outer housing via the aperture in the outer housing.

17. Apparatus as claimed in claim 7 or claim 8, or any preceding claim when dependent upon claim 7 or claim 8, further including: at least one tie bar engagement mechanism (26) adapted to releasably engage a tie bar (24) of a die cast machine, thereby preventing the tie bar engagement mechanism from sliding with respect to the tie bar.

18. Apparatus as claimed in any one of claims 1 to 6 or 17, wherein the tie bar engagement mechanism (26) includes a split nut (167) having a first portion (108) and a second portion (116) that reciprocate with respect to one another between an engaged position and a disengaged position, and wherein the first portion and the second portion each include a semicircular interior surface (112) having a plurality of grooves (114) adapted to mate with a plurality of grooves (106) extending circumferentially about the tie bar.

19. A method for clamping a two-platen die cast machine (10) that includes a frame assembly (12), a first platen (14) fixed with respect to the frame assembly; a second platen (16) movable with respect to the first platen between an open position and a closed position, a die block (18) having a first portion (20) fixedly attached to the first platen and a second portion (22) fixedly attached to the second platen, wherein the second portion of the die block is spaced apart from the first portion of the die block when the second platen is in the open position, and wherein the second portion of the die block abuts the first portion of the die block when the second platen is in the closed position, and at least one tie bar extending between the first platen and the second platen, the method comprising: moving the second platen to the closed position; releasably engaging a tie bar (24) of the die cast machine with a tie bar engagement mechanism (26), thereby preventing the tie bar engagement mechanism from sliding with respect to the tie bar; and providing a clamping force between the first die block and the second die block by extending at least one hydraulic piston assembly (28) between the second platen and the tie bar engagement mechanism.

20. The method of claim 19, wherein the piston assembly includes an outer housing (132) and an inner piston (130); and further including: locking the longitudinal travel of the outer housing with respect to the inner piston via a mechanical lock-up mechanism (168) mechanically linked to the inner piston and abutting the outer housing, thereby locking the travel of the second die block with respect to the first die block.

21. The method of claim 20, wherein the step of locking the travel of the outer housing (132) with respect to the inner piston (130) includes threadably engaging the inner piston with the mechanical lock-up device.

22. The method of claim 20 or claim 21, wherein the step of locking the travel of the outer housing with respect to the inner piston (130) includes abutting the outer housing with the mechanical lock-up device.

23. The method of claim 19, wherein the hydraulic piston assembly (28) includes an outer housing (132) having longitudinally extending bore and the bore includes a radially extending interior wall, and an inner piston (130) received within the bore of the outer housing and having an end wall, and wherein the step of providing a clamping force includes increasing a hydraulic pressure between the interior wall of the outer housing and the end wall of the inner piston.

24. The method of any one of claims 19 to 23, wherein the step of providing a clamping force includes pumping a hydraulic fluid into the piston assembly via an intensifier cylinder.

25. The method of any one of claims 19 to 25, wherein the step of providing a clamping force includes pumping a hydraulic fluid into the piston assembly via a hydraulic pump (158).

26. The method of any one of claims 19 to 25, wherein the tie bar engagement mechanism (26) includes a split nut (107) having a first portion (108) and a second portion the first portion (110) and the second portion each including a semicircular interior surface (112) having a plurality of grooves (114) that mate with a plurality of grooves (106) extending circumferentially about the tie bar, and wherein the step of releasably engaging the tie bar with the tie bar engagement mechanism includes reciprocating the first and second portions of the split nut with respect to one another until the grooves of the first and second portions of the split nut are engaged with the grooves of the tie rod.
